# EUROPÄISCHE PATENTSCHRIFT

(11) **EP 0 785 240 B1**
(45) Veröffentlichungstag und Bekanntmachung des Hinweises auf die Patenterteilung: **05.07.2000**
(21) Anmeldenummer: 97100217.5
(22) Anmeldetag: 09.01.1997
(51) Int. Cl.: C09D 11/02, C09D 183/06, C09D 11/10, C09D 183/12

(54) **Wässrige und strahlenhärtende Drucklacke und Druckfarben mit verbesserten Eigenschaften**
Aqueous, radiation curable printing lacquers and paints with improved properties
Encre et vernis d'impression aqueux durcissable par radiation avec des propriétés améliorées

(30) Priorität: 22.01.1996 DE 19602097
(43) Veröffentlichungstag der Anmeldung: 23.07.1997
(73) Patentinhaber: Goldschmidt AG, 45127 Essen (DE)
(72) Erfinder: Feldmann-Krane, Dr., 45472 Mülheim (DE); Hinrichs, Petra, 44866 Bochum (DE); Silber, Stefan, Dr., 47804 Krefeld (DE); Struck, Susanne, 47441 Moers (DE)

(56) Entgegenhaltungen:
- EP-A- 0 588 534
- EP-A- 0 644 222
- DE-A- 4 009 889

## Beschreibung

Die Erfindung betrifft wäßrige und strahlenhärtende Drucklacke und Druckfarben, die spezielle Polyoxyalkylen-Polysiloxan-Copolymerisate enthalten. Diese Drucklacke und Druckfarben besitzen eine verbesserte Kratzfestigkeit, eine erhöhte Gleitfähigkeit sowie eine äußerst geringe Schaumneigung, so daß die Druckfarbenherstellung problemloser verläuft und gleichzeitig ein optisch ansprechendes Druckbild erhalten werden kann.

Immer mehr Druckfarben und Drucklacke werden auf ökologisch unbedenklichere wasserbasierende und strahlungshärtende Systeme umgestellt. Diese Systeme sind bekannt und beispielsweise in "The Printing Ink Manual" (R. H. Leach, R. J. Pearce, London 1993) oder "UV and EB Curing Formulation for Printing Inks, Coatings and Paints" (R. Holeman, P. Oldring, London 1988) beschrieben.

Ihre Herstellung und insbesondere ihre Verarbeitungseigenschaften sind ursächlich mit den eingesetzten Additiven verknüpft. Wäßrige Druckfarben und Drucklacke haben aufgrund ihrer Bindemittel und der verwendeten Netzmittel eine starke Schaumneigung. Dies macht sich nicht nur bei der Herstellung dieser Farben negativ bemerkbar, sondern besonders bei der Applikation, wenn hohe Luftmengen in die Druckfarben und Drucklacke eingetragen werden.

Auch bei strahlenhärtenden Systemen ist deren Entschäumung ein häufig sehr kritisches Problem. Um eine entschäumende Wirkung zu erzielen, ist eine gewisse Unverträglichkeit notwendig. Nun haben strahlenhärtende Systeme auch ein sehr geringes Lösungsvermögen, so daß die Zugabe bekannter entschäumender Substanzen (z. B. Siliconöle) besonders bei Drucklacken sehr leicht zu Trübungen, Verlaufsstörungen oder Glanzreduzierung führt.

Die Verwendung von Siliconölen, insbesondere von Dimethylpolysiloxanen niedriger bis mittlerer Viskosität, für die Entschäumung wäßriger und strahlenhärtender Druckfarben ist bekannt und beispielsweise in dem Buch W. Noll "Chemie und Technologie der Silicone" bzw. in der vorgenannten Literatur beschrieben. Es ist ebenfalls bekannt, Polyoxyalkylen-Polysiloxan-Copolymerisate als Entschäumungsmittel zu verwenden. In der US-PS 3 763 021 ist eine Zubereitung zur Entschäumung wäßriger Latizes beschrieben, welche aus (1) 1 bis 20 Gew.-% eines Siloxanglycolcopolymeren der allgemeinen Formel 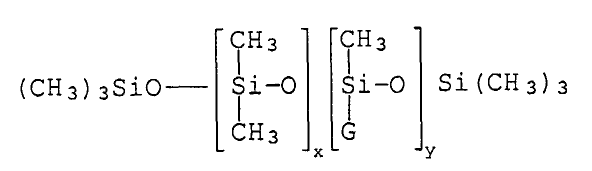 worin x einen durchschnittlichen Wert von 6 bis 420 und y einen durchschnittlichen Wert von 3 bis 30 hat und G einen Rest der Struktur -D(OR)_{z}A bedeutet, worin D ein Alkylenrest ist, R aus Ethylenresten und Propylen- oder Butylenresten in einem solchen Verhältnis von Ethylen- zu den anderen Alkylenresten zusammengesetzt ist, daß das Verhältnis von Kohlenstoffatomen zu Sauerstoffatomen in sämtlichen Blöcken OR im Bereich von 2,3 : 1 bis 2,8 : 1 liegt, z einen durchschnittlichen Wert von 25 bis 100 hat und A eine Abschlußgruppe ist, (2) 65 bis 98 Gew.-% Polypropylenglycol mit einem mittleren Molekulargewicht im Bereich von 1000 bis 2000 und (3) 1 bis 15 Gew.-% eines hydrophoben Siliciumdioxids besteht.

Typische Herstellungsmethoden dieser vorgenannten Polyoxyalkylen-Polysiloxan-Copolymere sind in US-PS 3 402 192, US-PS 3 746 653, US-PS 3 784 479 und US-PS 3 865 544 beschrieben.

Diese aus dem Stand der Technik bekannten Siliconöle oder Polyoxyalkylen-Polysiloxan-Copolymerisate enthaltenden Zubereitungen sind in mehr oder weniger ausgeprägtem Umfang geeignet, die Schaumbildung von wäßrigen oder strahlenhärtenden Druckfarben und Drucklacken zu verhindern oder bereits gebildeten Schaum zu zerstören. Es hat sich jedoch gezeigt, daß Drucklacke und Druckfarben, welchen zur Entschäumung Polysiloxane oder Polyoxyalkylen-Polysiloxan-Copolymerisate zugesetzt worden sind, beim Aufbringen auf Oberflächen vielfältige Benetzungsfehler sowie reduzierten Glanz aufweisen. Dies wird insbesondere für hochempfindliche Systeme und für die Bedruckung kritischer Untergründe (z. B. Polyolefinfolien) evident.

Ein wichtiges Einsatzgebiet sind Druckfarben für Papier und Folien. Bei der industriellen Herstellung dieser Druckerzeugnisse bereitet die Handhabung dieser Gegenstände Schwierigkeiten, weil es nicht immer zu vermeiden ist, daß die nach dem Druckvorgang gestapelten oder transportierten Elemente Schäden an der Oberfläche erleiden.

Man hat bereits versucht, die Handhabbarkeit frisch bedruckter Gegenstände dadurch zu verbessern, daß man der Druckfarbe reibungsmindernde Zusätze, wie Öle oder Wachse (z. B. Polyethylen- oder Polytetrafluorethylenwachse), zugesetzt oder diese nachträglich auf die gedruckten Oberflächen aufgebracht hat. Häufig führt auch dies zu einem störenden Glanzverlust. Das nachträgliche Aufbringen von Wachs auf das Druckerzeugnis kann auch nicht immer befriedigend sein, zumal durch diesen zusätzlichen Verfahrensschritt die Fertigungskosten erhöht werden. Auch werden hohe Einsatzkonzentrationen benötigt, um eine Verbesserung der Kratzfestigkeit zu erzielen.

Ähnlich wie in lufttrocknenden oder forciert (Temperatur) trocknenden Systemen werden auch heute in wäßrigen und strahlenhärtenden Drucklacken und Druckfarben Siliconöle, organisch modifizierte Siloxane, wie z. B. Polyoxyalkylen-Polysiloxan-Copolymerisate (z. B. DE-PS 36 37 155) oder auch sphärische Siliconelastomerpartikel zu diesen Zwecken eingesetzt.

Die vorgenannten Polyoxyalkylen-Polysiloxan-Copolymerisate sind jedoch erst in sehr hohen Konzentrationen im Sinne einer Verbesserung der Kratzfestigkeit effizient, führen allerdings in erheblichem Maße zu einer Schaumstabilisierung, die sowohl bei der Druckfarbenherstellung als auch beim eigentlichen Druckprozeß unerwünscht ist, wobei das Druckergebnis bzw. das Druckbild nachteilig beeinflußt werden. Hingegen ist dem Fachmann auch geläufig, daß der Einsatz sphärischer Siliconelastomerpartikel zu Glanzreduktion und vielfältigen Benetzungsfehlern führen kann.

Es besteht daher in der Praxis ein Bedarf an modifizierten Siliconzusatzmitteln, welche in geringen Konzentrationen die Handhabbarkeit von insbesondere serienmäßig bedruckten Gegenständen verbessern, wobei diese Zusatzmittel insbesondere die Kratzfestigkeit der frischen Oberflächen verbessern, deren Gleitfähigkeit erhöhen und dabei gleichzeitig die Schaumbildung verhindern oder bereits gebildeten Schaum zerstören, ohne das optische Druckbild durch Benetzungsfehler oder ähnliches zu beeinträchtigen.

Dabei sollen derartige Zusatzmittel von der Art und Zusammensetzung der Druckfarben und Drucklacke, denen sie zur Verbesserung der vorgenannten Eigenschaften zugesetzt werden, weitgehend unabhängig und universell anwendbar sein. Diese Additive sollen in möglichst geringen Mengen wirksam sein und die anwendungstechnischen Eigenschaften der Druckfarben und Drucklacke nicht verschlechtern. Sie sollen insbesondere nicht die Ausbildung des Oberflächenfilmes und die Aushärtung der Druckfarben beeinträchtigen. Sie dürfen ferner keinen nachteiligen Effekt auf die Stabilität der Druckfarben und Drucklacke haben und dürfen ihre Verlaufseigenschaften nicht verschlechtern.

Der Erfindung liegt nun die Aufgabe zugrunde, Verbindungen zu finden, die diese vorgenannten Anforderungen erfüllen und in geringer Zusatzmenge wirksam sind.

Diese Aufgabe wird erfindungsgemäß gelöst durch wäßrige und strahlenhärtende Drucklacke und Druckfarben, die Polyoxyalkylen-Polysiloxan-Copolymerisate der allgemeinen Formel 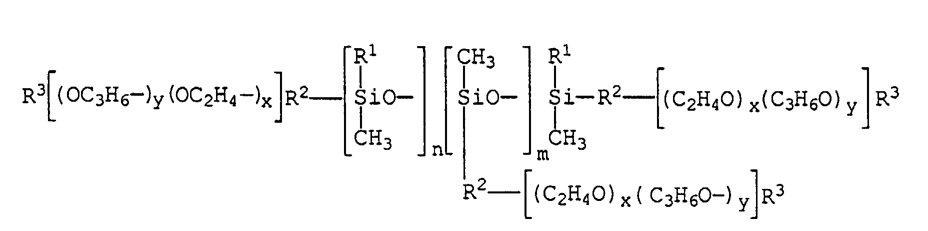 wobei
- R¹ =: Alkylrest mit 1 bis 8 Kohlenstoffatomen,
- R² =: (CH₂)ₚO-, wobei p = 2, 3 oder 4 ist,
- R³ =: Wasserstoff, ein Alkylrest mit 1 bis 4 Kohlenstoffatomen oder ein (Meth-)Acryloxyrest ist,
- n =: 40 bis 60 und
- m =: 0 bis 3,
wobei x und y so gewählt sind, daß das Molekulargewichtsmittel (Mw) der Polyoxyalkylenblöcke 300 bis 800 g/Mol beträgt, und das Molverhältnis x/y = 0,2 bis 0,7 ist,
in Mengen von 0,001 bis 1,5 Gew.-%, bezogen auf Lackformulierung, zur Verbesserung der Kratzfestigkeit sowie zur Entschäumung enthalten.

Von wesentlicher Bedeutung für die Eigenschaften der Verbindungen sind die Zahlenwerte der Indizes n und m. n gibt die Anzahl der Methylalkylsiloxyeinheiten an und bestimmt die Kettenlänge der Copolymerisate. n hat bei den erfindungsgemäß zu verwendenden Verbindungen einen Zahlenwert von 40 bis 60. Es ist dem Fachmann geläufig, daß die Verbindungen in Form eines Gemisches mit einer im wesentlichen durch statistische Gesetze geregelten Verteilung vorliegen. Der Wert von n stellt deshalb den Mittelwert der Anzahl der Methylalkylsiloxyeinheiten dar.

m hat einen Wert von 0 bis 3, vorzugsweise von 0 bis 1. Ist m = 0, handelt es sich bei den Verbindungen um lineare Siloxane, welche endständig Polyoxyalkyleneinheiten tragen. Die Polyoxyalkylenblöcke bestehen aus Oxyethylen- und Oxypropyleneinheiten, wobei das Molgewicht der Polyoxyalkylenblöcke 300 bis 800 g/Mol beträgt. Das Molverhältnis der Oxyethylen- zu den Oxypropyleneinheiten, ausgedrückt durch das Verhältnis x : y, beträgt 0,2 bis 0,7. Es hat sich gezeigt, daß diese Strukturen der Blockmischpolymerisate für die erfindungsgemäß erzielten Vorteile von entscheidender Bedeutung sind.

Bei den Formulierern strahlenhärtender Systeme in der Druckfarbenindustrie wird der Wunsch nach einem möglichst großen Anteil vernetzbarer Komponenten in der Formulierung immer lauter. Die Verwendung (meth-)acrylierter und somit vernetzbarer Additive minimiert deren Migrationsneigung und den Anteil extrahierbarer Substanzen aus dem Film. Daher ist deren Verwendung in strahlenhärtenden Drucklacken und Druckfarben besonders bevorzugt.

Beispiele erfindungsgemäß zu verwendender und besonders geeigneter Polyoxyalkylen-Polysiloxan-Copolymerisate sind:

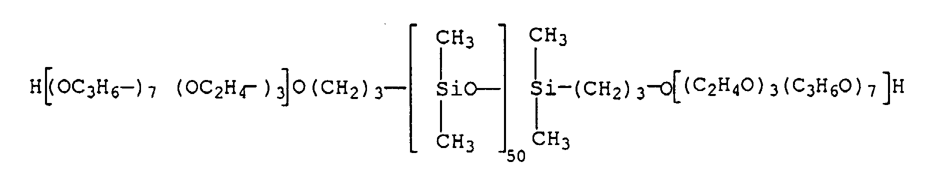

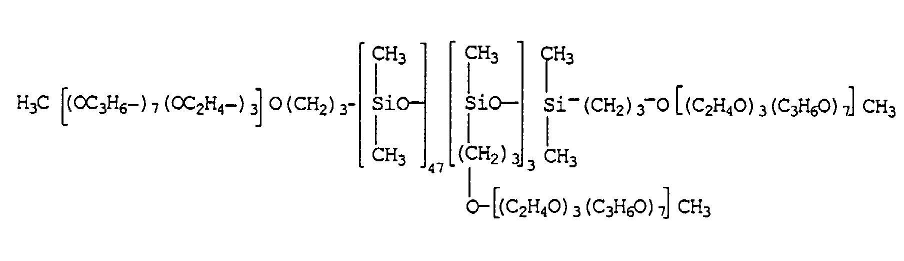

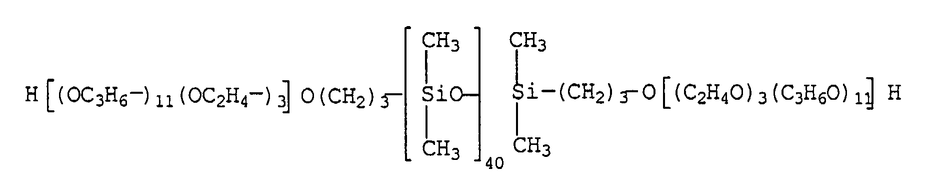

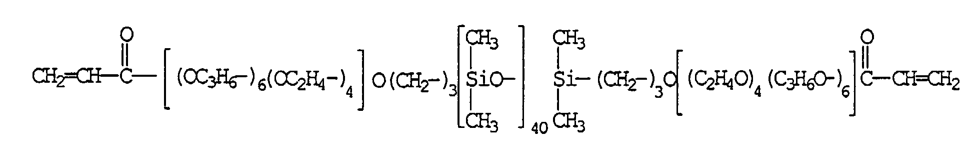

Diese Polyoxyalkylen-Polysiloxan-Copolymerisate werden durch Anlagerung von Polyoxyalkylenglykolen bzw. Polyoxyalkylenethern olefinisch ungesättigter Alkohole, wie z. B. Allylpolyoxyalkylenethern, an entsprechende Wasserstoffsiloxane hergestellt. Diese Reaktion wird durch Platinverbindungen katalysiert und ist z. B. in der DE-PS 11 65 028 beschrieben.

Etwaige Gehalte an freien Polyoxyalkylenglykolen oder deren Monoethern oder Monoestern, welche herstellungsbedingt in den erfindungsgemäß zu verwendenden Verbindungen enthalten sein können, können toleriert und müssen nicht vom Produkt abgetrennt werden.

Durch Umsetzung hydroxyfunktioneller Polyoxyalkylen-Polysiloxan-Copolymerisate mit Acrylsäure oder Methacrylsäure oder deren Estern können - dem Stand der Technik entsprechend - in Veresterungs- und Umesterungsreaktionen die entsprechenden acryloxy- oder methacryloxyfunktionellen Polyoxyalkylen-Polysiloxan-Copolymerisate erhalten werden.

Die Polyoxyalkylen-Polysiloxan-Copolymerisate können als solche oder in Form wäßriger Emulsionen eingesetzt werden.

Die erfindungsgemäß zu verwendenden Verbindungen werden den wäßrigen und strahlenhärtenden Drucklacken und Druckfarben in Mengen von 0,001 bis 1,5 Gew.-%, bezogen auf Lackformulierung, zugesetzt.

Die zu überprüfenden erfindungsgemäßen und nichterfindungsgemäßen Polyoxyalkylen-Polysiloxan-Copolymerisate entsprechen der allgemeinen Formel I. Dabei haben die Reste R¹, R² und R³ sowie die Indizes n, m, x und y die in nachfolgender Tabelle gezeigten Bedeutungen bzw. Werte.

**Tabelle**

| Verbindung | n | m | x | y | x/y | R1 | R2 | R3 |
|---|---|---|---|---|---|---|---|---|
| 1 | 50 | 0 | 3 | 7 | 0,43 | Methyl | Propoxy | H |
| 2 | 47 | 3 | 3 | 7 | 0,43 | Methyl | Propoxy | Methyl |
| 3 | 40 | 0 | 3 | 11 | 0,28 | Methyl | Propoxy | H |
| 4 | 40 | 0 | 4 | 6 | 0,66 | Methyl | Propoxy | Acryl |
| 5 | 50 | 8 | 3 | 7 | 0,43 | Methyl | Propoxy | H |
| 6 | 20 | 0 | 3 | 7 | 0,43 | Methyl | Propoxy | H |
| 7 | 50 | 0 | 9 | 21 | 0,43 | Methyl | Propoxy | H |
| 8 | 47 | 3 | 7 | 7 | 1 | Methyl | Propoxy | H |
| 9 | 47 | 3 | 7 | 7 | 1 | Methyl | Propoxy | Acryl |
| 10 | 40 | 0 | 0 | 10 | 0 | Methyl | Propoxy | Methyl |

Im folgenden werden die anwendungstechnischen Eigenschaften der verschiedenen erfindungsgemäß zu verwendenden Verbindungen 1 bis 4 sowie der Vergleichsbeispiele 5 bis 10 gezeigt.

Zur Überprüfung der anwendungstechnischen Eigenschaften werden die folgenden Rezepturen wäßriger und strahlenhärtender Drucklacke und Druckfarben ausgewählt, wobei sich die Mengenangaben auf Gew.-% beziehen:

### 1. Wäßrige Prüfsysteme

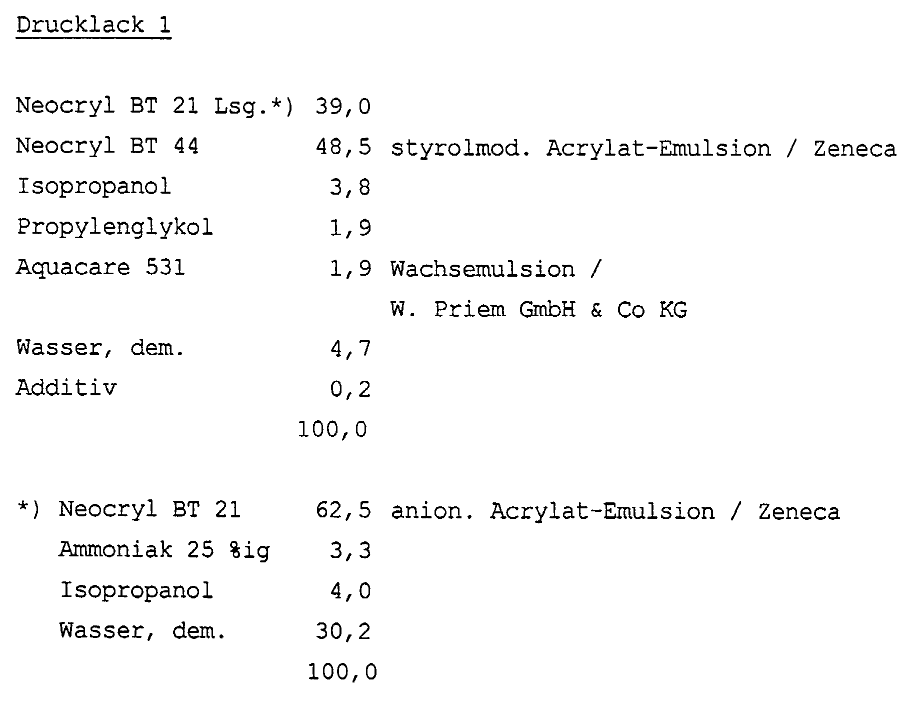

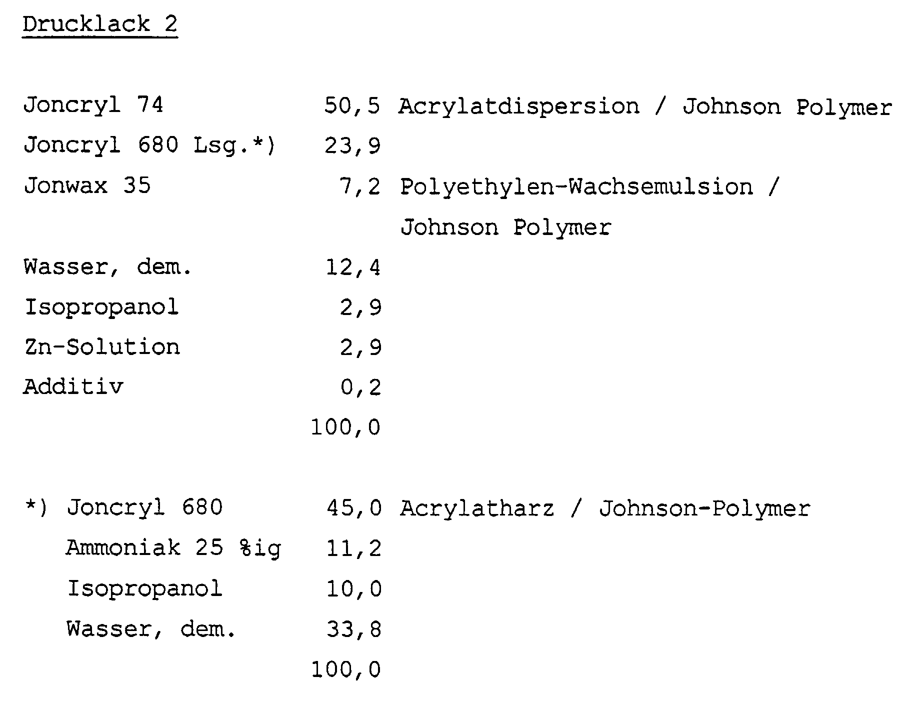

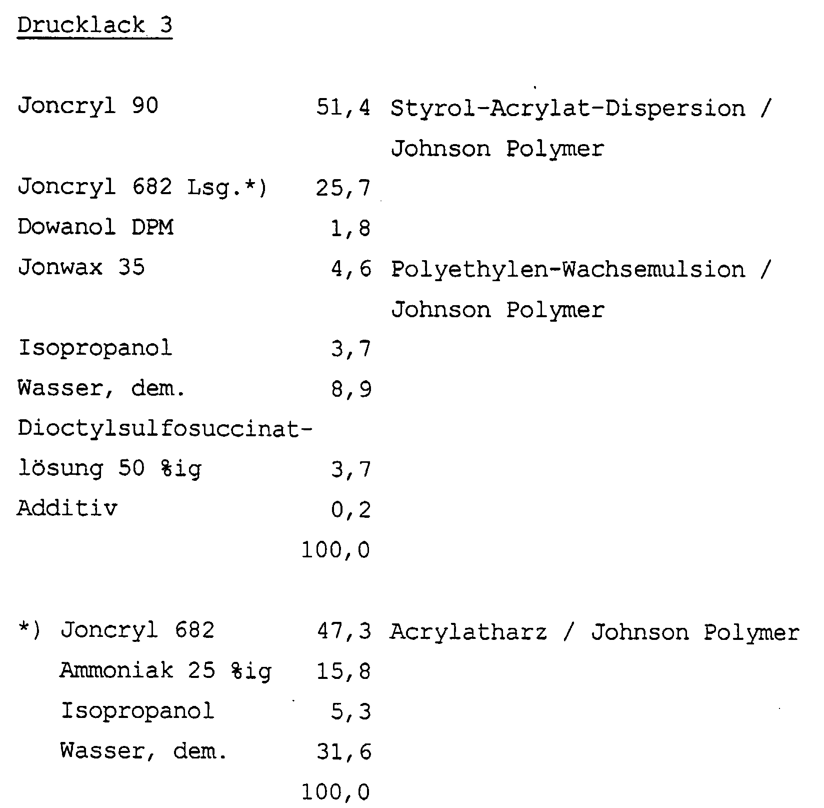

| Druckfarbe 1 | | |
|---|---|---|
| Mahlgut: | | |
| Joncryl 61 | 18,7 | Acrylatharzlösung / Johnson-Polymer |
| Foamex 810 | 0,1 | Entschäumer / Tego Chemie Service |
| Wasser, dem. | 7,5 | |
| Heliogenblau D7080 | 11,2 | Phthalocyaninblau / BASF |
| eine Stunde Dispergierung (Gerät: Scandex) | | |

| Auflackung: | | |
|---|---|---|
| Joncryl 8051 | 46,2 | Acrylatdispersion / Johnson Polymer |
| Jonwax 35 | 4,7 | Polyethylen-Wachsemulsion / Johnson Polymer |
| Additiv | 0,1 | |
| Wasser, dem. | 6,8 | |
| Isopropanol | 4,7 | |
| 5 Minuten Dispergierung (Gerät: Scandex) | | |
| | 100,0 | |

### 2. Strahlenhärtende Systeme

| Drucklack A | | |
|---|---|---|
| Ebecryl 608 | 40,0 | Epoxy-Acrylat-Oligomer / UCB |
| TPGDA | 19,0 | difunktionelles Acrylatmonomer / UCB |
| Ebecryl P 115 | 5,0 | tertiäres Amin / UCB |
| OTA 480 | 20,0 | trifunktionelles Acrylatoligomer / UCB |
| Benzophenon | 3,0 | Photoinitiator / UCB |
| Irgacure 651 | 2,0 | Photoinitiator / UCB |
| Additiv | 1,0 | |
| | 100,00 | |

| Drucklack B | | |
|---|---|---|
| Ebecryl 204 | 41,5 | PU-Acrylat / UCB |
| TPGDA | 41,0 | difunktionelles Acrylatmonomer / UCB |
| Darocure 1173 | 4,0 | Photoinitiator / Ciba-Geigy |
| Ebecryl P 115 | 8,0 | tertiäres Amin / UCB |
| Additiv | 1,0 | |
| | 100,00 | |

Die wäßrigen und strahlenhärtenden Drucklacke werden auf übliche Weise gemäß den vorstehenden Rezepturen formuliert. Als letzter Rezepturbestandteil werden jeweils die Additive hinzugegeben, wobei die Einarbeitung mittels einer Perlmillscheibe 3 Min. bei 1500 U/Min. erfolgt. Die Druckfarbe wird gemäß vorgenannter Rezeptur hergestellt, wobei die Dispergierung im Scandex erfolgt, und die Additive werden zuletzt dem Auflackgut hinzugegeben.

Die strahlenhärtenden Drucklacke werden mittels eines Spiralrakels (12 µm) naß auf coronavorbehandelter Lenetta-Folie, die Druckfarben auf transparenter PVC-Folie aufgerakelt. Die Härtung erfolgt durch zweimalige Einwirkung von ultraviolettem Licht mit 120 Watt/cm mit Bahngeschwindigkeiten von 20 m/Min.

Kratzfestigkeit ist die Widerstandsfähigkeit einer Oberfläche gegenüber sichtbaren linienförmigen Beschädigungen durch sich bewegende, die Oberfläche berührende harte Körper. Zur Messung sogenannter Kratzwerte dient ein speziell umgebautes elektromotorisches Filmaufziehgerät. Auf der beweglichen Rakelhalterung ist anstelle des eingelegten Filmziehrakels eine Platte montiert, die am anderen Ende des Gerätes auf Rollen liegt. Mit Hilfe der Rakelhalterung kann die Platte, auf der das Substrat (mit Druckfarbe beschichteter Film) befestigt wird, bewegt werden. Um die Kratzbeanspruchung zu simulieren, wird ein Klotz mit drei Spitzen auf den Druckfarbenfilm gesetzt und mit 500 g beschwert. Die auf der Platte befindliche Prüffolie wird mit einer Geschwindigkeit von 12 mm/Sek. unter dem Gewicht weggezogen. Die hierfür notwendige vertikale Kraft wird gemessen und als Kratzwert bezeichnet. Die Ermittlung der Kratzwerte erfolgt jeweils 24 Std. nach Aushärtung der Filme.

Ersetzt man die Spitzen durch Halbkugeln und verfährt man wie zuvor beschrieben, so mißt man als Reibungskraft den sogenannten Gleitwert.

### Schaumtest

50 g der wäßrigen Drucklacke und Druckfarben werden in ein 150-ml-Becherglas eingewogen und 1 Min. bei 2500 U/Min. mit einer Dissolverscheibe (3 cm Durchmesser) geschert. Anschließend werden 45 g in einen Standzylinder eingewogen und die Schaumhöhe in ml angegeben.

### Entlüftungstest

30 g der strahlenhärtenden Drucklacke werden in ein 50-ml-Schraubendeckelglas eingewogen und 5 Min. bei 3000 U/Min. mit einer Dissolverscheibe (2 cm Durchmesser) geschert. Gemessen wird die Schaumhöhe in mm und die Zeit des Abbaus der Schaumkrone in Stunden.

### Benetzungsverhalten

Die wie zuvor beschrieben hergestellten Filme werden visuell auf Benetzungsstörungen hin untersucht. Die Beurteilung erfolgt nach einer Skala von 1 bis 4, wobei 1 einen störungsfreien Film beschreibt, 4 von starken Benetzungsstörungen zeugt.

| Ergebnisse in Drucklack 1 | | | | | |
|---|---|---|---|---|---|
| Verbindung | Konzentration | Schaumwert ml/45g | Kratzwert mN/m | Gleitwert mN/m | Benetzungsverhalten (Skala 1-4) |
| Nullprobe | 0 | 110 | 234 | 230 | 1 |
| 1 | 0,2 | 48 | 108 | 78 | 1 |
| 2 | 0,2 | 50 | 92 | 74 | 1 |
| 3 | 0,2 | 47 | 125 | 92 | 1 |
| 4 | 0,2 | 52 | 83 | 67 | 1 |
| 5 | 0,2 | 53 | 170 | 134 | 1 |
| 6 | 0,2 | 57 | 155 | 128 | 1 |
| 7 | 0,2 | 72 | 136 | 100 | 2 |
| 8 | 0,2 | 75 | 98 | 79 | 1 |
| 9 | 0,2 | 73 | 104 | 79 | 1 |
| 10 | 0,2 | 52 | 180 | 134 | 3 |

| Ergebnisse in Drucklack 2 | | | | | |
|---|---|---|---|---|---|
| Verbindung | Konzentration | Schaumwert ml/45g | Kratzwert mN/m | Gleitwert mN/m | Benetzungsverhalten (Skala 1-4) |
| Nullprobe | 0 | 69 | 185 | 107 | 1 |
| 1 | 0,2 | 46 | 100 | 62 | 1 |
| 2 | 0,2 | 48 | 90 | 58 | 1 |
| 3 | 0,2 | 46 | 102 | 66 | 1 |
| 4 | 0,2 | 47 | 85 | 63 | 1 |
| 5 | 0,2 | 51 | 152 | 95 | 1 |
| 6 | 0,2 | 53 | 155 | 92 | 1 |
| 7 | 0,2 | 65 | 118 | 70 | 2 |
| 8 | 0,2 | 63 | 98 | 64 | 1 |
| 9 | 0,2 | 60 | 104 | 61 | 1 |
| 10 | 0,2 | 48 | 123 | 70 | 4 |

| Ergebnisse in Drucklack 3 | | | | | |
|---|---|---|---|---|---|
| Verbindung | Konzentration | Schaumwert ml/45g | Kratzwert mN/m | Gleitwert mN/m | Benetzungsverhalten (Skala 1-4) |
| Nullprobe | 0 | 103 | 182 | 142 | 1 |
| 1 | 0,2 | 47 | 108 | 90 | 1 |
| 2 | 0,2 | 48 | 90 | 82 | 1 |
| 3 | 0,2 | 46 | 100 | 88 | 1 |
| 4 | 0,2 | 48 | 89 | 79 | 1 |
| 5 | 0,2 | 51 | 140 | 123 | 1 |
| 6 | 0,2 | 52 | 138 | 127 | 1 |
| 7 | 0,2 | 72 | 106 | 76 | 2 |
| 8 | 0,2 | 70 | 110 | 76 | 1 |
| 9 | 0,2 | 68 | 104 | 90 | 1 |
| 10 | 0,2 | 47 | 140 | 118 | 3 |

| Ergebnisse in Druckfarbe 1 | | | | | |
|---|---|---|---|---|---|
| Verbindung | Konzentration | Schaumwert ml/45g | Kratzwert mN/m | Gleitwert mN/m | Benetzungsverhalten (Skala 1-4) |
| Nullprobe | 0 | 62 | 159 | 120 | 1 |
| 1 | 0,2 | 45 | 106 | 70 | 1 |
| 2 | 0,2 | 47 | 90 | 68 | 1 |
| 3 | 0,2 | 46 | 99 | 72 | 1 |
| 4 | 0,2 | 47 | 89 | 66 | 1 |
| 5 | 0,2 | 49 | 128 | 99 | 2 |
| 6 | 0,2 | 52 | 138 | 106 | 1 |
| 7 | 0,2 | 58 | 103 | 73 | 2 |
| 8 | 0,2 | 57 | 108 | 75 | 2 |
| 9 | 0,2 | 57 | 104 | 74 | 2 |
| 10 | 0,2 | 46 | 140 | 108 | 4 |

| Ergebnisse in Drucklack A | | | | | | |
|---|---|---|---|---|---|---|
| Verbindung | Konzentration | Schaumhöhe mm | Schaumzerfallszeit min | Kratzwert mN/m | Gleitwert mN/m | Benetzungsverhalten (Skala 1-4) |
| Nullprobe | 0 | 10 | 180 | 230 | 198 | 3 |
| 1 | 1 | 1 | 15 | 102 | 84 | 1 |
| 2 | 1 | 1 | 15 | 94 | 80 | 1 |
| 3 | 1 | 1 | 10 | 99 | 86 | 1 |
| 4 | 1 | 1 | 15 | 89 | 79 | 1 |
| 5 | 1 | 1 | 20 | 168 | 150 | 2 |
| 6 | 1 | 1 | 15 | 150 | 135 | 2 |
| 7 | 1 | 7 | 150 | 107 | 89 | 3 |
| 8 | 1 | 8 | 220 | 99 | 80 | 2 |
| 9 | 1 | 8 | 250 | 97 | 74 | 2 |
| 10 | 1 | 1 | 15 | 140 | 123 | 4 |

| Ergebnisse in Drucklack B | | | | | | |
|---|---|---|---|---|---|---|
| Verbindung | Konzentration | Schaumhöhe mm | Schaumzerfallszeit min | Kratzwert mN/m | Gleitwert mN/m | Benetzungsverhalten (Skala 1-4) |
| Nullprobe | 0 | 8 | 150 | 210 | 168 | 2 |
| 1 | 1 | 1 | 10 | 80 | 72 | 2 |
| 2 | 1 | 1 | 15 | 78 | 70 | 2 |
| 3 | 1 | 1 | 10 | 85 | 75 | 2 |
| 4 | 1 | 1 | 15 | 80 | 69 | 2 |
| 5 | 1 | 1 | 20 | 159 | 109 | 2 |
| 6 | 1 | 1 | 15 | 150 | 115 | 2 |
| 7 | 1 | 7 | 100 | 97 | 85 | 3 |
| 8 | 1 | 8 | 170 | 80 | 78 | 3 |
| 9 | 1 | 8 | 150 | 84 | 80 | 3 |
| 10 | 1 | 1 | 10 | 136 | 99 | 4 |

Wie aus den vorhergehenden Tabellen ersichtlich ist, zeichnen sich die erfindungsgemäß zu verwendenden Verbindungen durch ihre universelle Anwendbarkeit aus.

Wie sich aus den Vergleichsbeispielen ergibt, sind die Indizes n und m sowie die Werte x und y sowie deren Verhältnis maßgeblich für die Tatsache, daß die erfindungsgemäß zu verwendenden Polyoxyalkylen-Polysiloxan-Copolymerisate ausgezeichnete Entschäumer sind, gleichzeitig die Kratzfestigkeit der Druckfarben und deren Gleitfähigkeit erhöhen, ohne daß Benetzungsfehler beim Druckvorgang verursacht werden.

## Patentansprüche

1. Wäßrige und strahlenhärtende Drucklacke und Druckfarben, enthaltend Polyoxyalkylen-Polysiloxan-Copolymerisate der allgemeinen Formel 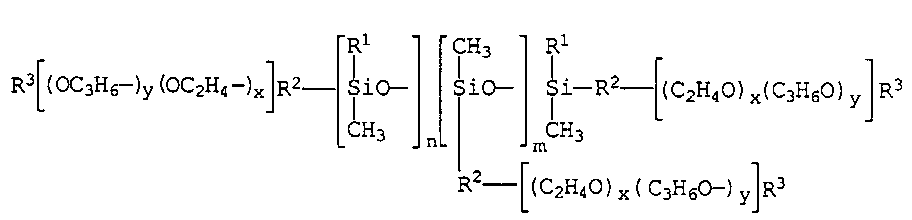 wobei
R¹ = Alkylrest mit 1 bis 8 Kohlenstoffatomen,
R² = (CH₂)ₚO -, wobei p = 2, 3 oder 4 ist,
R³ = Wasserstoff, ein Alkylrest mit 1 bis 4 Kohlenstoffatomen oder ein (Meth-)Acryloxyrest ist,
n = 40 bis 60 und
m = 0 bis 3,
wobei x und y so gewählt sind, daß das Molekulargewichtsmittel der Polyoxyalkylenblöcke 300 bis 800 g/Mol beträgt, und das Molverhältnis x/y = 0,2 bis 0,7 ist,
in Mengen von 0,001 bis 1,5 Gew.-%, bezogen auf Lackformulierung.

2. Wäßrige und strahlenhärtende (UV-)Drucklacke und Druckfarben gemäß Anspruch 1, dadurch gekennzeichnet, daß m = 0 oder 1 ist.

3. Strahlenhärtende (UV-)Drucklacke und Druckfarben gemäß Anspruch 1, dadurch gekennzeichnet, daß der Rest R³ Methacryloxy oder Acryloxy ist.

4. Wäßrige Drucklacke und Druckfarben gemäß Anspruch 1, dadurch gekennzeichnet, daß der Rest R³ Wasserstoff oder ein Methylrest ist.

## Claims

1. Aqueous and radiation-curing printing varnishes and printing inks which contain polyoxyalkylene-polysiloxane copolymers of the general formula 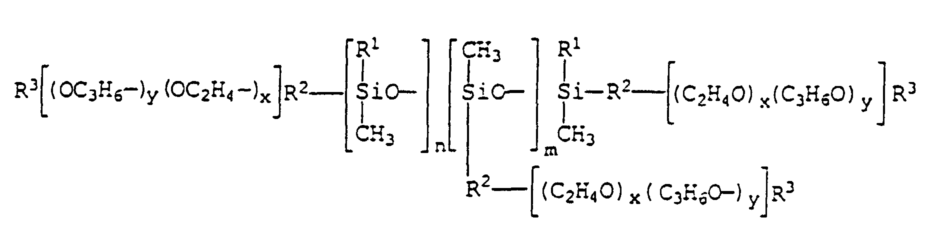 where
R¹ = alkyl radical with 1 to 3 carbon atoms,
R² = (CH₂)ₚO-, where p = 2, 3 or 4,
R³ = hydrogen, an alkyl radical with 1 to 4 carbon atoms, or a (meth)acryloxy radical,
n = 40 to 60, and
m = 0 to 3,
x and y being selected such that the molecular weight average of the polyoxyalkylene blocks is from 300 to 800 g/mol and the molar ratio x/y = 0.2 to 0.7,
in amounts of from 0.001 to 1.5% by weight based on the varnish/ink formulation.

2. Aqueous and radiation-curing (UV) printing varnishes and printing inks according to Claim 1, characterized in that m = 0 or 1.

3. Radiation-curing (UV) printing varnishes and printing inks according to Claim 1, characterized in that the radical R³ is methacryloxy or acryloxy.

4. Aqueous printing varnishes and printing inks according to Claim 1, characterized in that the radical R³ is hydrogen or a methyl radical.

## Revendications

1. Vernis et encres d'impression aqueux et durcissables par rayons contenant des copolymères de polyoxyalkylène/polysiloxane de formule générale 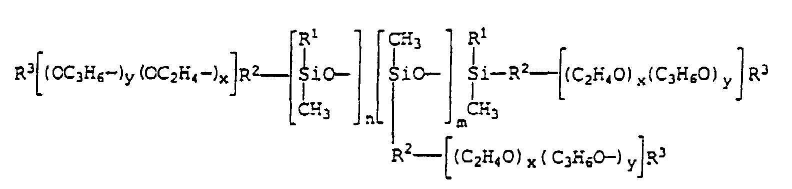 dans laquelle
R¹ = un radical alkyle avec 1 à 8 atomes de carbone,
R² = (CH₂)ₚO-, où p = 2, 3 ou 4,
R³ = un hydrogène, un radical alkyle avec 1 à 4 atomes de carbone ou un radical (méth)acryloxy,
n = 40 à 60, et
m = 0 à 3,
dans laquelle x et y sont sélectionnés de telle sorte que la moyenne de poids moléculaire des blocs de polyoxyalkylène vaut de 300 à 800 g/mole, et le rapport molaire x/y = 0,2 à 0,7,
dans des quantités de 0,001 à 1,5% en poids, sur base de la formulation du vernis.

2. Vernis et encres d'impression aqueux et durcissables par rayons (UV) suivant la revendication 1, caractérisés en ce que m = 0 ou 1.

3. Vernis et encres d'impression durcissables par rayons (UV) suivant la revendication 1, caractérisés en ce que le radical R³ est un méthacryloxy ou un acryloxy.

4. Vernis et encres d'impression aqueux suivant la revendication 1, caractérisés en ce que le radical R³ est un hydrogène ou un radical méthyle.
